Europäisches Patentamt

(19) European Patent Office

Office européen des brevets

(11) Publication number: **0 038 076**
A1

(12) EUROPEAN PATENT APPLICATION

(21) Application number: 81102850.5

(22) Date of filing: 14.04.81

(51) Int. Cl.³: **B 03 D 1/02,** C 03 C 1/02, C 03 B 1/00 // B01F17/42, C07C149/06

(30) Priority: 14.04.80 US 140273

(43) Date of publication of application: 21.10.81 Bulletin 81/42

(84) Designated Contracting States: **BE DE FR GB IT SE**

(71) Applicant: **PHILLIPS PETROLEUM COMPANY, 5th and Keeler, Bartlesville Oklahoma 74004 (US)**

(72) Inventor: **Parlman, Robert Myles, 4725 S.E.Amherst Drive, Bartlesville Oklahoma (US)**

(74) Representative: **Dost, Wolfgang, Dr. et al, Patent- u. Rechtsanwälte Pagenberg-Dost-Altenburg Galileiplatz 1, D-8000 München 80 (DE)**

(54) Method for removing iron impurities from glass-making sand.

㉗ A method for removing iron impurities from glass-making sand employing alkanethiol as a collecting agent in a froth flotation process. In embodiments of the invention the alkanethiol is used in conjunction with frothing agent and is selected from compounds represented by the formula $C_nH_{2n+1}SH$ wherein n is an integer in the range from 5 to 17.

EP 0 038 076 A1

1

## METHOD FOR REMOVING IRON IMPURITIES FROM GLASS-MAKING SAND

### Background of the Invention

This invention relates to froth flotation processes. In one of its aspects the invention relates to the removal of iron impurity from glass-making sand. In another of its aspects this invention relates to the use of alkanethiols as an iron collector in froth flotation of iron impurities. In another of its aspects the invention relates to the use of polyalkylene glycol frothing agents in combination with alkanethiol collecting agents.

In ore flotation finely ground minerals are separated from their associated constituents, ores, gangue, or wastes. The flotation process is based on the fact that properly prepared mineral surface has an affinity for air bubbles. Froth flotation is a process in which a froth is formed by introducing air into a pulp of finely divided ore and water containing a frothing agent. Minerals that have a specific affinity for air bubbles rise to the surface with the foam or froth and are separated from those materials that are merely wetted by the water but do not rise to the surface in the froth. Froth flotation is a principal means for separating and concentrating copper, lead, zinc, phosphates, potash and a host of other ores.

It is well known to add reagents in a froth flotation process to enhance separation. Those added to stabilize the air bubbles so that they will rise to the surface for subsequent removal in the form of froth are called frothing agents and include such materials as pine oils, cresols, and alcohols. There are also reagents that can selectively cause mineral particles to become hydrophobic so that they can be brought to the surface with the air bubbles and separated with the froth. These reagents are called collectors and include among others such compounds as xanthates, amines, alkyl sulfates, arene sulfonates, dithiocarbamates, dithiophosphates, and thiols (mercaptans).

Alkanethiols are known as ore flotation agents or mineral collectors for many kinds of minerals, but their use in the flotation of iron compounds has not been particularly documented. Also it has been reported in "Flotation" by A. M. Gaudin, McGraw Hill Book Co., 1932 First Edition, that iron pyrite is floated better with xanthate collectors than with mercaptan collectors. It has now been recognized that alkanethiols can be particularly useful in the separation of iron impurities from glass making sands in a flotation process.

Statement of the Invention

According to this invention, a method is provided for removing iron impurities from glass making sand by froth flotation of the impurity-containing sand employing alkanethiol as a collecting agent.

The alkanethiols useful in this invention as iron collectors are represented by the formula $C_nH_{2n+1}SH$ wherein n can be any integer from 5 to 17, preferably 9 to 17. Representative of this type materials are, but not limited to, for example n-alkanethiols: 1-pentanethiol, 1-hexanethiol, 1-nonanethiol, 1-decanethiol, 1-undecanethiol, 1-dodecanethiol (n-dodecanethiol), 1-tetradecane-thiol, 1-heptadecanethiol; sec-alkanethiols: 2-nonanethiol, 2-decanethiol, 2-undecanethiol, 2-dodecanethiol, 2-heptadecanethiol, 3-nonanethiol, 3-dodecanethiol, 3-heptadecanethiol; and tert-alkanethiols: 2-methyl-2-octanethiol, 3-methyl-3-octanethiol, 4-ethyl-4-heptanethiol, 2-methyl-2-undecanethiol (tert-dodecanethiol), 3-methyl-3-undecanethiol (tert-dodecanethiol), 4-ethyl-4-decanethiol (tert-dodecanethiol), 5-ethyl-5-decanethiol (tert-dodecanethiol), 2,4,6-trimethyl-4-nonanethiol (tert-dodecanethiol), 3-n-propyl-3-tetradecanethiol, 2,4,6,8,10-pentamethyl-2-dodecanethiol and the like and mixtures thereof.

The tertiary-dodecanethiol used in the examples described herein was a mixture of tertiary-dodecanethiols available from Phillips Petroleum Co. under the tradename of Sulfole® 120. These materials are prepared by adding $H_2S$ to a propylene tetramer. This preparation is generally described in U.S. Patent 2,392,555, incorporated here by reference.

The amount of alkanethiol employed will generally be from (0.005 to 0.3 lbs) 2.3 to 136 g per ton of sand used. The mercaptan may be employed either as a primary or as a secondary collector or both.

The types of frothing agents useful in this invention are any materials known to those skilled in the art. Generally these will be alkylarylpolyether alcohols, sulfonates, polyalkylene glycols, polyalkylene glycol monoalkyl ethers, cresylic acid, pine oils, alcohols and the like. The amount of frothing agent to be used will generally be from 5 to 30 weight percent based on the mercaptan employed. This is equivalent to (0.00025 to 0.09) 0.11 to 41g lbs. of frothing agent per ton of sand employed.

The types of sand treated by the method of this invention are any of those containing iron either as a major component or as a minor impurity. Iron can be as free iron, iron sulfide, iron oxide, iron silicate or any other similar combinations of iron, but is particularly effective in removing iron pyrite. Examples of typical forms of iron are, but not limited to, iron sulfide: pyrite, marcasite, pyrrhotite; iron silicate: chamosite, silomelane, greenalite, minnesotaite, grunerite; iron oxide: magnetite, hematite, ilmenite, limonite; iron carbonate: sederite. Removal of iron in combination with other metals is also within the scope of this invention. Such materials are for example, but not limited to,

| chromite | $FeO \cdot Cr_2O_3$ |
| arsenopyrite | $FeAsS$ |
| chalcopyrite | $CuFeS_2$ |
| bornite | $Cu_5FeS_4$ |
| cubanite | $Cu_2SFe_4S_5$ |
| valerite | $Cu_2Fe_4S_7$ or $Cu_3Fe_4S_7$ |
| daubrelite | $FeSCr_2S_3$ |

It is preferred that the sand be diluted with water to about 10 to 40 weight percent solids and that the particle size of the sand be such that it can pass through a U.S. Sieve screen size of at least 65 (0.23 mm sieve opening).

The following examples serve to illustrate the operability of this invention.

## Example I

This example is a control which describes the procedure used to remove iron impurities from glass-making sand. A 1000 gram charge of silica sand having an iron content of 0.025 weight percent and a physical screen analysis as shown in Table I was placed in a Denver flotation cell, Model D-12. This provided about 20 weight percent solids when the cell volume was brought up to the proper level with tap water. To this mixture was added 1 milliliter of an aqueous solution containing 0.5 grams polypropylene glycol monomethyl ether (Flotanol®C-7, mol. weight 250-450) dissolved in 1000 grams of water. This is equivalent to 0.005 grams (0.01 lb./ton sand) of Flotanol®C-7 which is employed as a frothing agent. The agitator was turned on at 1200 rpm and the pulp was allowed to condition for one minute. The pH at this point was 8. Air was introduced into the sand through the agitator at 1.20 $m^3$/hour (42.5 cubic feet/hour). The froth was scraped off with a paddle at 50 strokes per minute for a period of five minutes. The remaining sand was removed from the cell, washed with copious amounts of water, oven dried at 82°C (180°F) for about 24 hours and analyzed by Emission Spectroscopy using a Siemens x-ray fluorescence spectrograph. The treated sand possessed an iron content of 0.0225.

### Silica Sand
### Table I.  Physical Screen Analysis[a]

| mm | (U.S. Sieve No) | Wt. % |
|---|---|---|
| 0.21 — | (70) | 10.16 |
| 0.149 — | (100) | 35.29 |
| 0.105 — | (140) | 40.08 |
| 0.074 — | (200) | 12.88 |
| | (Thru) | 1.59 |
| | | 100.00 |

a.  Sand obtained from Midcontinent Glass Sand Co., Roff, OK.

### Example II

This example is an inventive run illustrating the effectiveness of n-dodecanethiol as a collector in removing iron pyrite impurities from glass-making sand.  The procedure described in Example I was repeated except 0.05 grams (0.1 lbs/ton sand) of n-dodecanethiol was added to the aqueous sand mixture along with 0.5 milliliters of the aqueous Flotanol®C-7 frothing solution previously described. The treated sand when dried and analyzed was found to contain 0.0195 weight percent iron.  Table II shows the effect of n-dodecanethiol concentration on iron removal from subsequent runs.

### Table II.  n-Dodecanethiol[a] as Ore Flotation Agent For Iron Pyrite Removal

| n-Dodecanethiol,Conc. g/ton Sand (lb/ton) | Frother,Conc. g/ton Sand (lb./ton) | Iron Content of Sand After Flotation, Wt. % |
|---|---|---|
| Initial | — | 0.025 |
| Control | 4.5(0.010) | 0.0225 |
| 45.4(0.1) | 2.3(0.005) | 0.0195 |
| 90.7(0.2) | 4.5(0.010) | 0.0175 |
| 136.1(0.3) | 6.8(0.015) | 0.0165 |

a.  Available from Phillips Petroleum Co.

### Example III

This example is an inventive run illustrating the effectiveness of tert-dodecanethiol as a collector in removing iron pyrite impurities from glass-making sand.  The procedure described in Example I was again repeated except 0.05 grams (0.1 lbs./ton sand) of tert-dodecanethiol (Sulfole® 120, Phillips Petroleum Co.) was added to the aqueous sand mixture along with 0.5 milliliters of the aqueous Flotanol®C-7 frothing solution previously described.

The treated sand when dried and analyzed was found to contain 0.0185 weight percent iron. Table III shows the effect of tert-dodecanethiol concentration on iron removal from subsequent runs.

Table III. tert-Dodecanethiol[a] as Ore Flotation Agent For Iron Pyrite Removal

| tert-Dodecanethiol[a] Conc. g/ton Sand (lb/ton) | Frother[b] Conc. g/ton Sand (lb/ton) | Iron Content of Sand After Flotation, Wt. % |
|---|---|---|
| Initial | - | 0.025 |
| Control | 4.5 ( 0.010) | 0.0225 |
| 45.4 ( 0.1) | 2.3 ( 0.005) | 0.0185 |
| 90.7 ( 0.2) | 4.5 ( 0.010) | 0.0165 |
| 136.1 ( 0.3) | 6.8 ( 0.015) | 0.0115 |

a. Sulfole® 120, available from Phillips Petroleum Co.
b. Flotanol® C-7, available from American Hoechst.

EP-28 323/US-27 303 D/ra

Claims

1. A method for removing iron impurities from glass-making sand by froth flotation in the presence of a collecting agent and, optionally, in the presence of a frothing agent, c h a r a c t e r i z e d   b y  employing as collecting agent one or more of alkanethiols represented by the formula $C_nH_{2n+1}SH$ wherein n is an integer from 5 to 17.

2. A method according to claim 1 characterized in that n is an integer from 9 to 17.

3. A method according to claim 2 characterized in that said alkanethiol is tert-dodecanethiol or n-didecanethiol.

4. A method according to one of claims 1 to 3 characterized by using as said frothing agent at least one of alkylarylpolyether alcohols, sulfonates, polyalkylene glycols, polyalkylene glycol monoalkyl ethers, cresylic acid, pine oils and alcohols.

5. A method according to claim 4 characterized by using as said frothing agent a polyalkylene glycol monoalkyl ether.

6. A method according to claim 5 characterized in that said polyalkylene glycol monoalkyl ether is polypropylene glycol monomethyl ether.

European Patent
Office

**EUROPEAN SEARCH REPORT**

0038076

Application number

EP 81102850.5

## DOCUMENTS CONSIDERED TO BE RELEVANT

| Category | Citation of document with indication, where appropriate, of relevant passages | Relevant to claim |
|---|---|---|
| X | FR - A1 - 2 371 967 (TEKPLEX PROPRIETARY LTD.) <br><br> + Page 1 - page 3, line 14; examples 10, 21; claims 18, 20 + | 1-6 |
| P | & US-A-4 211 644 (08-07-1980) <br> -- | |
| | FR - A - 1 345 176 (DR. SPIESS GMBH) <br><br> + Page 1, left column + <br> ---- | 1 |

**CLASSIFICATION OF THE APPLICATION (Int. Cl.³)**

B 03 D 1/02
C 03 C 1/02
C 03 B 1/00//
B 01 F 17/42
C 07 C 149/06

**TECHNICAL FIELDS SEARCHED (Int. Cl.³)**

C 03 B
C 03 C
B 03 D
B 01 F

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |

| Place of search | Date of completion of the search | Examiner |
|---|---|---|
| VIENNA | 22-06-1981 | KAHOVEC |

EPO Form 1503.1   06.78